**Europäisches Patentamt**

(19) **European Patent Office**

**Office européen des brevets**

(11) Numéro de publication: **0 056 750 B1**

(12) **FASCICULE DE BREVET EUROPEEN**

(45) Date de publication du fascicule du brevet:
**11.07.84**

(51) Int. Cl.³: **B 23 K 5/22**

(21) Numéro de dépôt: **82400035.0**

(22) Date de dépôt: **11.01.82**

(54) **Poste à deux ou plusieurs bouteilles de gaz pour le soudage et autres applications.**

(30) Priorité: **12.01.81 FR 8100362**

(43) Date de publication de la demande:
**28.07.82 Bulletin 82/30**

(45) Mention de la délivrance du brevet:
**11.07.84 Bulletin 84/28**

(84) Etats contractants désignés:
**AT BE CH DE FR GB IT LI LU NL SE**

(56) Documents cités:
**CH - A - 115 567**
**FR - A - 2 387 402**
**GB - A - 18 089**
**GB - A - 569 826**
**US - A - 2 561 595**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Paravigna, Zivko, Labergement Foigney, F-21110 Genlis (FR)**
Inventeur: **Boursaud, Jack, rue Paul Doumer, F-21110 Genlis (FR)**
Inventeur: **Tassart, Christian, 31, rue Jean XXIII, F-91800 Brunoy (FR)**

(74) Mandataire: **Leclercq, Maurice et al, L'AIR LIQUIDE SOCIETE ANONYME POUR L'ETUDE ET L'EXPLOITATION DES PROCEDES GEORGES CLAUDE 75, Quai d'Orsay, F-75321 Paris Cedex 07 (FR)**

## Description

La présente invention se rapporte à un poste ayant au moins deux bouteilles de gaz groupées en un ensemble portable, par exemple une bouteille de gaz comburant et une bouteille de gaz combustible. Elle concerne plus particulièrement un poste ayant au moins deux bouteilles de gaz groupées en un ensemble portable, dans lequel les bouteilles sont montées par leurs bouches sur un bloc qui comporte un passage entre la bouche de chaque bouteille et un raccord d'alimentation correspondant, et un moyen de contrôle de débit dans chaque passage.

De tels postes sont notamment utilisés pour le soudage, le soudo-brasage, l'oxycoupage et autres applications.

Généralement, les postes portables du type précité (voir par exemple le GB-A-18 089 AD 1909) nécessitent une double manœuvre pour leur mise en marche ou pour l'arrêt. De plus, il est souvent nécessaire de procéder à un nouveau réglage à chaque mise en marche.

Sans doute, on peut obtenir une ouverture et une fermeture rapide et simultanée des deux circuits de gaz en manipulant le chalumeau alimenté par le poste ou un dispositif intermédiaire prévu entre le chalumeau et le poste, mais une telle action n'est généralement pas possible, d'une manière directe et instantanée, sur le poste lui-même, c'est-à-dire à la source.

La présente invention a pour objet un poste ayant au moins deux bouteilles de gaz groupées en un ensemble portable, qui est exempt de ces inconvénients et qui est directement manœuvrable en ouverture et en fermeture d'une manière très facile, ceci avec une construction simple et commode.

Suivant l'invention, ce poste est caractérisé en ce que le bloc comporte également une commande commune unique adaptée à agir simultanément sur tous les moyens de contrôle de débit et constituée par une poignée montée mobile sur le bloc entre une position de fermeture et une position d'ouverture.

Grâce à cette double fonction de la poignée, d'une part, de transport du poste et, d'autre part, de commande d'ouverture et de fermeture, le poste permet d'ouvrir ou de fermer en toute sécurité, à la source même d'alimentation et sans déréglage, simultanément les deux circuits de gaz. Cette manœuvre est particulièrement simple et peut être effectuée, facilement par des non-professionnels. Le poste permet également, d'une manière tout aussi simple, de modifier la puissance de chauffe.

De préférence, un moyen de réglage du débit ayant une commande individuelle est en outre prévu et est associé à l'un des passages. Ce moyen de réglage permet de doser à volonté la proportion du mélange, et ceci indépendamment de la commande commune pour l'ouverture et la fermeture globales, dans un poste à deux bouteilles.

Dans une forme d'exécution préférée, la poignée présente, entre les positions de fermeture et d'ouverture, au moins une position intermédiaire de mi-ouverture.

Suivant une autre caractéristique, la poignée est montée mobile sur le bloc de telle façon que, lorsqu'elle est utilisée pour porter le poste, elle soit butée sur le bloc en position de fermeture. La poignée est donc telle que, lors du transport du poste, la fermeture soit assurée, ce qui permet une sécurité totale.

Dans une forme d'exécution préférée, chaque moyen de contrôle de débit comporte un organe actionneur qui est monté mobile dans le bloc entre une position de fermeture et une position d'ouverture et qui est rappelé élastiquement en position de fermeture, lesdits organes actionneurs constituant des suiveurs de came qui coopèrent avec une surface de came ménagée sur la poignée. Celle-ci est avantageusement montée pivotante sur le bloc.

Une forme d'exécution de l'invention est ci-après décrite, à titre d'exemple, en référence aux dessins annexés dans lesquels:
— la figure 1 est une vue d'ensemble, en élévation d'un poste suivant l'invention;
— la figure 2 est une vue en perspective de la poignée du poste;
— la figure 3 est une vue, à plus grande échelle, du bloc sur lequel les bouteilles du poste sont montées et montre le bloc en position de fermeture des deux gaz;
— la figure 4 est une vue correspondante, en coupe suivant la ligne brisée IV-IV de la figure 3;
— la figure 5 est une vue analogue à la figure 3 mais montre le bloc en position de mi-ouverture;
— la figure 6 est une vue correspondante, en coupe suivant la ligne brisée VI-VI de la figure 5;
— la figure 7 est une vue analogue à la figure 3 ou à la figure 5, mais montre le bloc en position d'ouverture;
— la figure 8 est une vue correspondante, en coupe suivant la ligne brisée VIII-VIII de la figure 7.

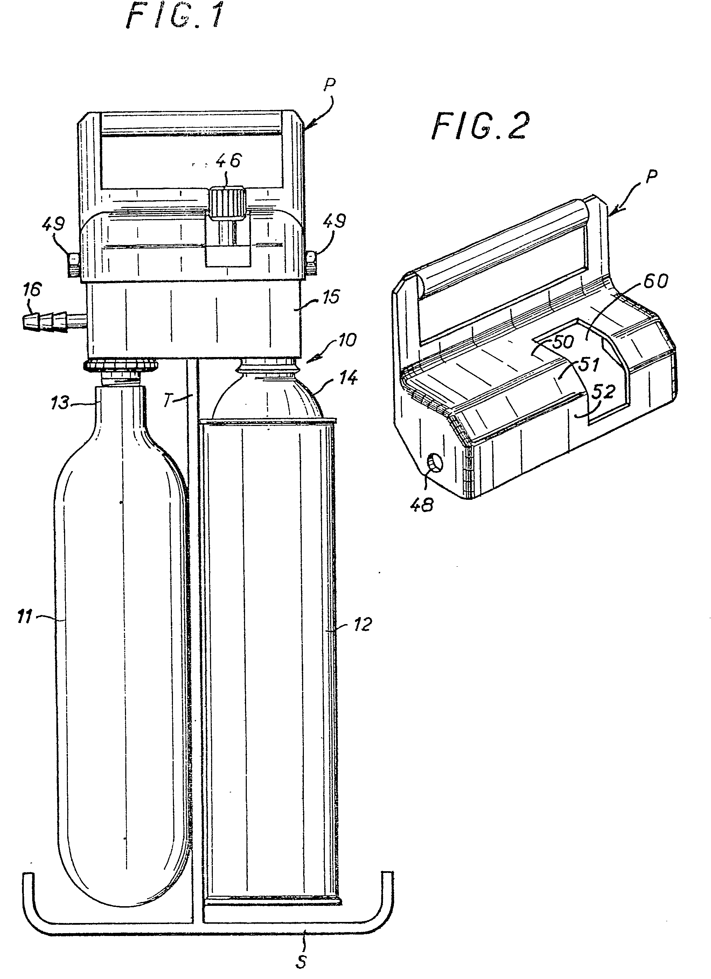

Dans le mode de réalisation représenté aux figures 1 à 8, on voit à la figure 1, en 10, un poste suivant l'invention par exemple pour le soudage, le soudo-brasage, l'oxycoupage ou autres applications.

Le poste 10 comporte (figure 1) deux bouteilles de gaz 11 et 12, par exemple une bouteille 11 de gaz comburant tel qu'oxygène ou autre, et une bouteille 12 de gaz combustible, tel qu'acétylène ou autre. Les bouteilles 11 et 12 sont groupées en un ensemble portable au moyen d'une poignée P.

Plus particulièrement, les bouteilles 11 et 12 sont montées par leurs bouches 13 et 14, sur un bloc 15. Le bloc 15 est rendu solidaire par une tige T d'un socle S permettant de poser au sol le poste 10 d'une façon stable.

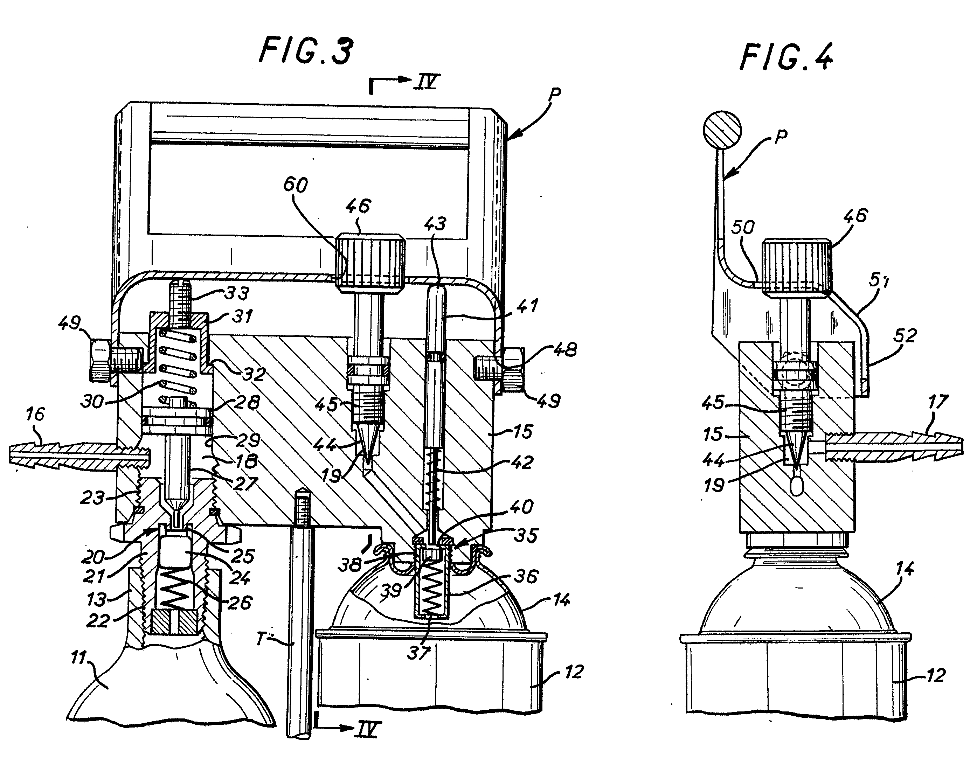

Le bloc 15 comporte (figures 3 et 4) un raccord 16 de gaz comburant et un raccord 17 de gaz combustible, destinés à être reliés par des tuyaux souples à un chalumeau.

Le bloc 15 comporte un premier passage 18 entre la bouche 13 de la bouteille 11 et le raccord 16, et un deuxième passage 19 entre la bouche 14 de la bouteille 12 et le raccord 17.

Un premier moyen de contrôle de débit 20 est prévu dans le passage 18 et comporte un corps 21 interposé entre la bouche 13 et le bloc 15, en étant par exemple vissé en 22 dans la bouche 13 et en 23 dans le bloc 15. Ce premier moyen de contrôle de débit 20 comporte également un clapet de détente 24 monté mobile dans le corps 21 et adapté à obturer un orifice 25 du corps 21. Le clapet 24 est sollicité en position de fermeture de l'orifice 25 par un ressort 26.

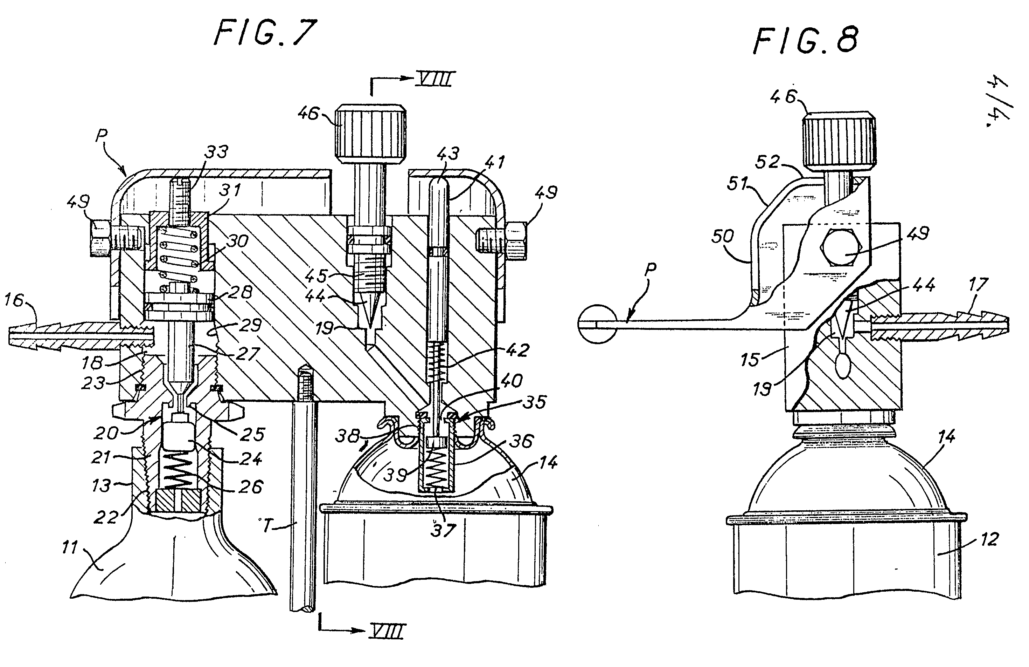

Le clapet 24 est en outre sollicité en position d'ouverture par l'extrémité d'une tige 27 d'un piston 28. Le piston 28 est monté coulissant dans un perçage cylindrique 29 faisant partie du premier passage 18. Le piston 28 est monté coulissant dans le bloc 15 entre une position de fermeture (figure 3) et une position d'ouverture (figure 7) du clapet 24. Le piston 28 constitue, en même temps, un demi-détendeur et est relié par un ressort 30 à une cloche 31 montée coulissante dans le bloc 15.

La cloche 31 constitue un organe actionneur du clapet 24 par l'intermédiaire du ressort 30 et du piston 28. Cet organe actionneur 31 est monté coulissant dans le perçage 29 entre une position de fermeture (figure 3) et une position d'ouverture (figure 7). Un épaulement 32 du bloc 15 est prévu pour empêcher la cloche 31 de sortir intempestivement du bloc 15. La cloche 31 est munie d'une saillie 33 vissable sur la cloche 31 de manière réglable. La saillie 33 forme un suiveur de came, ainsi qu'il apparaîtra plus loin.

Un deuxième moyen de contrôle de débit 35 est disposé dans le deuxième passage 19 et comporte un corps 36 monté dans la bouche 14 et vissé en 38 dans le bloc 15. Ce moyen 35 comporte également un clapet 39 monté mobile dans le corps 36 et adapté à obturer un orifice 40 du corps 36. Le clapet 39 est sollicité en position de fermeture par un ressort 37. Le clapet 39 est en outre adapté à être ouvert par un organe actionneur d'ouverture 41 monté coulissant dans le corps 15 entre une position de fermeture (figure 3) et une position d'ouverture (figure 4). L'organe actionneur 41 est rappelé en position de fermeture par un ressort 42 et présente une extrémité 43 qui constitue un suiveur de came, au même titre que la saillie 33, ainsi qu'il apparaîtra plus loin.

Le deuxième passage 19 comporte en outre un moyen de réglage de débit 44 consistant en un pointeau (figures 3 et 4) qui est vissé en 45 dans le bloc 15 et qui est muni d'un bouton de manœuvre 46. Celui-ci traverse librement une ouverture 60 ménagée dans la poignée P.

Le bouton 46 constitue une commande individuelle pour le pointeau 44, tandis qu'une commande commune unique est prévue pour les deux clapets 24 et 39.

Cette commande commune unique est constituée par la poignée P. A cet effet, la poignée P est montée mobile sur le bloc 15 entre une position de fermeture (figure 4) et une position d'ouverture (figure 8). Plus particulièrement, la poignée P est montée pivotante sur le bloc et, à cet effet, présente des trous 48 (figures 2 à 4) engagés sur des vis 49 vissées dans le bloc 15.

La poignée P présente en outre une surface de came qui coopère avec les suiveurs 33 et 43. Plus particulièrement, cette surface de came comporte trois portées 50, 51 et 52 qui sont prévues de plus en plus proches de l'axe de pivotement 49 de la poignée P.

En position de transport, la poignée P est butée par sa portée 52 contre le bloc 15, ce qui correspond à la position de fermeture (figure 4). Ainsi, une sécurité totale est obtenue.

Dans cette position de fermeture, c'est la portée 50 qui coopère avec les suiveurs 33 et 43 et l'on peut observer à la figure 3, que ces suiveurs 33 et 43 occupent la position la plus haute possible, dans laquelle les clapets 24 et 39 ne sont pas sollicités en ouverture.

En vue de l'utilisation, il suffit de régler préalablement la saillie 33 sur la cloche 31 par vissage ou dévissage pour déterminer la précontrainte du ressort 30, cette opération étant généralement faite une fois pour toutes en usine. L'utilisateur a toute facilité, au moyen du bouton 46, de régler le pointeau 44 qui détermine la richesse en combustible du mélange alimentant le chalumeau. Lorsque ce réglage est fait, il est obtenu une fois pour toutes.

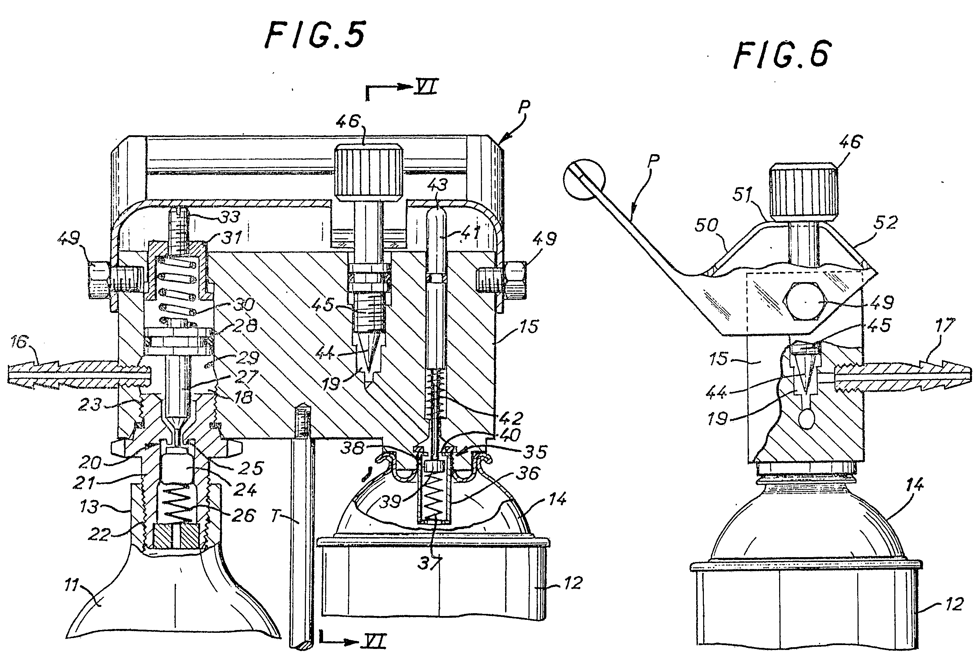

Pour ouvrir les gaz, il suffit d'abaisser la poignée P comme on le voit à la figure 6 ou à la figure 8.

Dans une position de mi-ouverture (figures 5 et 6), c'est la portée intermédiaire 51 qui vient au contact des suiveurs 33 et 43, ce qui détermine un léger écartement des clapets 24 et 39 de leurs sièges respectifs 25 et 40.

Pour la pleine ouverture, il suffit d'abaisser la poignée P dans la position de la figure 8 et c'est la portée 52 la plus proche de l'axe de pivotement 49, qui vient en contact avec les suiveurs 33 et 43. Dans ce cas, ces suiveurs 33 et 43 sont abaissés au maximum et l'on voit dans la position de pleine ouverture (figures 7 et 8) que les clapets 24 et 39 sont fortement éloignés de leurs sièges respectifs 25 et 40.

On appréciera la construction particulièrement simple et commode du poste suivant l'invention, ainsi que sa manœuvre facile et sa totale sécurité.

On notera que la came définie par la poignée peut présenter des portées 50, 51, 52 de toute forme appropriée de préférence incurvée. La came peut également avoir un profil progressif pour doser le débit des gaz de façon continue.

Il est également à noter que le poste peut fonctionner avec deux gaz de toutes natures et même avec trois gaz ou davantage.

### Revendications

1. Poste ayant au moins deux bouteilles de gaz (11, 12) groupées en un ensemble portable, dans lequel les bouteilles sont montées par leurs bouches (13, 14) sur un bloc (15) qui comporte un passage (18, 19) entre la bouche de chaque bouteille et un raccord d'alimentation (16, 17) correspondant, et un moyen de contrôle de débit (20, 35) dans chaque passage, poste caractérisé en ce que le bloc comporte également une commande commune unique (P) adaptée à agir simultanément sur tous les moyens de contrôle de débit (20, 35) et constituée par une poignée montée mobile sur le bloc (15) entre une position de fermeture et une position d'ouverture.

2. Poste suivant la revendication 1, à deux bouteilles, caractérisé en ce qu'un moyen de réglage (44) ayant une commande individuelle (46) est prévu et est associé à l'un des passages (18, 19).

3. Poste suivant l'une des revendications 1 et 2, caractérisé en ce que la poignée (P) présente, entre les positions de fermeture et d'ouverture, au moins une position intermédiaire de mi-ouverture.

4. Poste suivant l'une quelconque des revendications 1 à 3, caractérisé en ce que la poignée (P) est montée mobile sur le bloc de telle façon que lorsqu'elle est utilisée pour porter le poste, elle soit butée sur le bloc (15) en position de fermeture.

5. Poste suivant l'une quelconque des revendications 1 à 4, caractérisé en ce que chaque moyen de contrôle de débit (20, 35) comporte un organe actionneur (31, 41) qui est monté mobile dans le bloc (15) entre une position de fermeture et une position d'ouverture et qui est rappelé élastiquement en position de fermeture, lesdits organes actionneurs (31, 41) constituant des suiveurs de came (33, 43) qui coopèrent avec une surface de came (50, 51, 52) ménagée sur la poignée (P).

6. Poste suivant la revendication 5, caractérisé en ce que la poignée (P) est montée pivotante sur le bloc (15).

## Patentansprüche

1. Apparat mit mindestens zwei Gasflaschen (11, 12), die in einer tragbaren Gesamtheit zusammengefasst sind, bei welchem die Flaschen durch ihre Öffnungen (13, 14) auf einem Block (15) montiert sind, der einen Durchgang (18, 19) zwischen der Öffnung jeder Flasche und einem entsprechenden Versorgungsanschluss (16, 17) und Steuermittel (20, 35) in jedem Durchgang für den Durchsatz aufweist, dadurch gekennzeichnet, dass der Block ebenfalls eine einzige, gemeinsame Steuerung (P) aufweist, die geeignet derart ausgestaltet ist, dass sie gleichzeitig auf alle Steuermittel (20, 35) für den Durchsatz wirkt und aus einem Handgriff besteht, der auf dem Block (15) beweglich zwischen einer Schliess- und einer Öffnungsstellung angebracht ist.

2. Apparat nach Anspruch 1 mit zwei Flaschen, dadurch gekennzeichnet, dass ein Regelungsmittel (44) mit einer individuellen Steuerung (46) vorgesehen und einem der Durchgänge (18, 19) zugeordnet ist.

3. Apparat nach Anspruch 1 oder 2, dadurch gekennzeichnet, dass der Handgriff (P) zwischen der Öffnungs- und Schliessstellung mindestens eine halbgeöffnete Zwischenstellung aufweist.

4. Apparat nach einem der Ansprüche 1 bis 3, dadurch gekennzeichnet, dass der Handgriff (P) auf dem Block beweglich derart angebracht ist, dass er während der Benutzung zum Tragen des Apparates auf dem Block (15) in Schliessstellung abgestützt ist.

5. Apparat nach einem der Ansprüche 1 bis 4, dadurch gekennzeichnet, dass jedes Steuermittel (20, 35) für den Durchsatz ein Betätigungsorgan (31, 41) aufweist, welches beweglich in dem Block (15) zwischen einer Schliessstellung und einer Öffnungsstellung angebracht ist und elastisch in Schliessstellung zurückgebracht ist, und dass die Betätigungsorgane (31, 41) Nockenfolger (33, 43) bilden, die mit einer Oberfläche eines auf dem Handgriff (P) angebrachten Nockens (50, 51, 52) zusammenwirken.

6. Apparat nach Anspruch 5, dadurch gekennzeichnet, dass der Handgriff (P) schwenkbar auf dem Block (15) angebracht ist.

## Claims

1. Appliance using at least two gas bottles (11, 12) put together to a portable unit, in which the bottles are mounted by their mouths (13, 14) on a block (15) which comprises a passage (18, 19) between the mouth of each bottle and a corresponding supply connection (16, 17), and control means (20, 35) for the output in each passage, characterized by that the block also comprises a unique common command (P) adapted to act simultaneously on all the control means (20, 35) for the output and defined by a handle mounted movably on the block (15) between a closing position and an opening position.

2. Appliance according to claim 1 with two bottles, characterized by that a regulating means (44) having an individual command (46) is provided and associated to one of the passages (18, 19).

3. Appliance according to one of the claims 1 and 2, characterized by that the handle (P) has, between the closure position and opening position at least one intermediate half opening position.

4. Appliance according to one of the claims 1 to 3, characterized by that the handle (P) is mounted movable on the block in such a way that while it is utilized to carry the appliance, it is abut on the block (15) in closing position.

5. Appliance according to any of the claims 1 to 4, characterized by that each control means (20, 35) for the output comprises an actuating element (31, 41) which is mounted movable in the block (15) between a closing position and an opening position and which is elastically retracted in closing position, the said actuating elements (31, 41) forming cam followers (33, 43) which cooperate with one surface of the cam (50, 51, 52) arranged on the handle (P).

6. Appliance according to claim 5, characterized by that the handle (P) is pivotable mounted on the block (15).

FIG.1

FIG.2

FIG.4

FIG.3

# FIG.5

# FIG.6

0 056 750

4/4.

FIG. 8

FIG. 7